# EUROPEAN PATENT APPLICATION

(11) **EP 3 667 619 A1**
(43) Date of publication of application: **17.06.2020**
(21) Application number: 18211641.8
(22) Date of filing: 11.12.2018
(51) Int. Cl.: G06T 11/00

(54) **SYSTEM, METHOD AND COMPUTER PROGRAM FOR RECONSTRUCTING A MATERIAL-SPECIFIC IMAGE OF AN OBJECT**

(71) Applicant: Koninklijke Philips N.V., 5656 AG Eindhoven (NL)
(72) Inventor: SOSSIN, Artur, 5656 AE Eindhoven (NL); DAERR, Heiner, 5656 AE Eindhoven (NL)
(74) Representative: de Haan, Poul Erik

(57) **Abstract**

The invention provides a system for reconstructing a material-specific image. The system comprises a projection data providing unit 110 providing spectral projection data that has been acquired using an x-ray imaging system, for instance, a spectral CT system. A discretization unit 120 adapted to differentiate the spectral projection data into discrete elements and to determine a discrete projection value for each energy bin for each discrete element, wherein the discrete projection value is determined based on the projection values in the energy bin assigned to the discrete element, wherein the number of discrete elements is adapted locally based on local characteristics of the spectral projection data. An image reconstructing unit 130 reconstructs the material-specific image by applying a material decomposition algorithm on the discretized projection data. The system allows for improving the image quality of a material-specific image while reducing the computational costs during the reconstruction of the material-specific image.

## Description

### FIELD OF THE INVENTION

The invention relates to a system, a method and a computer program for reconstructing a material-specific image of an object.

### BACKGROUND OF THE INVENTION

With today's CT systems it is possible to provide energy resolved projection data. Based on this energy resolved projection data, i.e. spectral projection data, material-specific images of an object can be reconstructed using material decomposition algorithms. These material decomposition algorithms are computationally very expensive such that they are often not applicable in applications where time is crucial. Moreover, since a signal for a specific energy is often very low, the reconstructed material-specific images suffer from noise induced bias.

### SUMMARY OF THE INVENTION

It is an object of the present invention to provide a system, a method and a computer program for reconstructing a material-specific image of an object that allows for improving the image quality of the reconstructed material-specific image and further reduces the computational costs for the reconstruction.

In a first aspect of the invention a system for reconstructing a material-specific image of an object is presented, wherein the system comprises a) a projection data providing unit for providing spectral projection data of an object, wherein the spectral projection data has been acquired using an x-ray imaging system and comprises projection values for each detector element of a radiation detector of the x-ray imaging system and for each energy bin of a plurality of pre-defined energy bins, wherein a projection value is indicative of radiation being detected by a detector element in one of the energy bins after having traversed the object, b) a discretization unit for discretizing the spectral projection data, wherein the discretization of the spectral projection data comprises differentiating the spectral projection data into discrete elements and determining a discrete projection value for each energy bin for each discrete element, wherein to each discrete element at least one projection value of each energy bin is assigned and wherein the discrete projection value of an energy bin of a discrete element is determined based on the projection values in the energy bin assigned to the discrete element, wherein the number of discrete elements used for discretizing the spectral projection data is adapted locally based on local characteristics of the spectral projection data, c) an image reconstructing unit for reconstructing a material-specific image of the object by applying a material decomposition algorithm on the discretized projection data comprising the discrete projection values.

Since during discretization of the spectral projection data the number of discrete elements used for discretizing the spectral projection data is adapted locally based on characteristics of the spectral projection data, wherein the material-specific image is then reconstructed based on the discretized projection data, individual characteristics of the spectral projection data can be taken into account and utilized to adapt the number of discrete elements such that, for instance, projection values comprising only a very low signal can be combined in one discrete element. Accordingly, based on the characteristics of the spectral projection data, a bias due to a very low signal can be avoided. Moreover, the number of discrete elements can be adapted such that in parts of the spectral projection data that show, for instance, as characteristics locally a very low change between projection values, the number of discrete elements can be reduced such that the reconstruction based on the discretized projection data will be less computational expensive. Thus, the system allows for improving the image quality of a material-specific image while reducing the computational costs during the reconstruction of the material-specific image.

The projection data providing unit can be a storing unit in which the spectral projection data is stored already and from which the spectral projection data can be retrieved. The projection data providing unit can also be a receiving unit for receiving the spectral projection data from an x-ray imaging system, wherein the projection data providing unit is then adapted to provide the received spectral projection data. The spectral projection data has been acquired with an x-ray imaging system that allows for an energy resolved detection of projection data. Such an x-ray imaging system can be, for instance, a dual energy CT system or a spectral CT system. Moreover, the x-ray imaging system can be a conventional CT system being adapted, for instance, through a specific control and analysis unit, to provide energy resolved projection data. The x-ray imaging system is preferably a CT system, but can be any imaging system in which a provided radiation is detected after having traversed a region of interest, for instance, a projectional radiography system, a fluoroscopy system, etc. The x-ray imaging system comprises a radiation detector comprising detector elements that allow for detecting a radiation provided by a radiation source of the x-ray imaging system that has traversed a region of interest of an object within the x-ray imaging system. Preferably, the detector comprises detector elements with photon count capabilities, such that a projection value refers to the count of photons of a detector element within a predefined energy bin. The x-ray imaging system comprises a radiation source for generating radiation with different radiation energies. The radiation energies preferably form a radiation spectrum, but can also form a plurality of discrete radiation energies. For providing the radiation a fast kVp switching method in a dual energy system or dual source system can be used. Moreover, also effects provided by the construction of the x-ray imaging system can be used for providing different radiation energies. Also other methods for providing radiation with different energies can be contemplated. The radiation energies provided by the radiation source can be divided into a plurality of energy bins, wherein each energy bin comprises a part of the radiation energies and is defined by a lower energy threshold and an upper energy threshold referring to the boundaries of the energy bin, wherein the energy bins, i.e. the lower and upper thresholds of the energy bins, are predetermined. Preferably, the selection of the energy bins, i.e. the selection of the lower and upper energy thresholds of the energy bins, depends on the imaging task, i.e. depends on the spectral image that should be reconstructed. In one example, a first energy bin can be determined as having a lower threshold of 20 keV and an upper threshold of 60 keV and a second energy bin as having a lower threshold of 60 keV and an upper threshold of 120 keV, but also other thresholds and more energy bins can be contemplated.

The projection values are indicative of radiation detected by the detector elements of the detector in the predetermined energy bins, wherein the radiation is provided by the radiation source. Each detector element generates a projection value for each predefined energy bin. Preferably, the x-ray imaging system provides for each detector element in each energy bin the number of photons that interact with the detector element in that energy bin during a predetermined time period, i.e. the counts of the number of photons having an energy corresponding to the energy bin, as projection value for that detector element and that energy bin.

The discretization unit is adapted to discretize the spectral projection data. For discretizing the spectral projection data, the spectral projection data of each energy bin is differentiated into discrete elements. A discrete element comprises at least one projection value of each energy bin of the spectral projection data, but can also comprise more than one projection value of an energy bin. Preferably, the discretization is based on a representation of the spectral projection data, wherein the representation of the spectral projection data sorts the projection values in accordance with a predetermined criterion. Preferably, in such an embodiment the discretization comprises spatially discretizing the spectral projection data, wherein the spectral projection data is differentiated into discrete elements based on the spatial distribution of the spectral projection data in the representation of the spectral projection data. Thus, in this case a discrete element can only comprise projection values that are spatially neighboring in the representation. For instance, a representation of the spectral projection data can be determined by determining a real position for each projection value, wherein the real position of a projection value can be determined, for instance, based on the real position of the detector element at the time at which the detector value was detected. The spectral projection value can then be sorted in accordance with the real positions of the projection values to provide a representation. Detector values from neighboring real positions can then be determined in the representation. A spatial discretization can then comprise, for instance, differentiating the spectral projection data into discrete elements such that a discrete element only comprises projection values in an energy bin that are directly spatially neighbored to each other in the representation. Alternatively, if the spectral projection data is provided as spectral tomographic projection data, i.e. refers to spectral projection data provided for different views of the object, it is preferred that the discretization is based on a representation of the spectral projection data with respect to the different views, for instance, a sinogram representation. Accordingly, in this case the spatial discretization comprises differentiating the spectral projection data such that a discrete element can comprise projection values of an energy bin that are spatially neighboring projection values in the respective representation of the spectral projection data.

The discretization unit is further adapted to discretize the spectral projection data such that the number of discrete elements is adapted locally based on characteristics of the spectral projection data. The number of discrete elements can be adapted by increasing the number of discrete elements or decreasing the number of discrete elements used for discretizing a certain part of the spectral projection data. The local adaptation of the number of discrete elements refers to providing a certain number of discrete elements to only parts of the spectral projection data that can, for instance, correspond to a region within a respective representation of the spectral projection data, wherein a region of a respective representation of the spectral projection data refers to a neighborhood of detection values in an energy bin within the respective representation. For example, if the discretization of the spectral projection data comprises a spatial discretization that is based on a representation of the spectral projection data, a first region of the representation corresponding to a first part of the spectral projection data can be discretized with a first number of discrete elements, whereas a second region of the representation corresponding to a second part of the spectral projection data can be discretized with a second number of discrete elements. The local adaptation of the number of discrete elements is based on characteristics of the spectral projection data. These characteristics can refer, for instance, to characteristics of the spectral projection data in a specific representation of the spectral projection data, for instance, in a spatial representation or a sinogram representation, but can also refer to characteristics of the spectral projection data that can be derived from knowledge about the object to be imaged. The characteristics can refer, for instance, to a distribution of the projection values in the spectral projection data, certain values of the projection values in the spectral projection data, structures found in a representation of the spectral projection data, etc. The number of discrete elements for discretizing the spectral projection data can then be adapted based on these local characteristics of the spectral projection data such that in parts of the spectral projection data, for instance, in regions of a representation of the spectral projection data, that have to be reconstructed with a higher accuracy, the number of discrete elements is increased, wherein in parts of the spectral projection data that can be reconstructed with a lower accuracy, or in which the signal-to-noise ratio of the provided projection values is low, the number of discrete elements is decreased.

To each discrete element at least one projection value in each energy bin is assigned, wherein also more than one projection value of an energy bin can be assigned. The projection values are assigned to the discrete elements by determining the spectral projection values in an energy bin that belong to a part of the spectral projection data covered, i.e. discretized, by the respective discrete element. For instance, if the discrete elements are determined based on a sinogram representation of the spectral projection data a discrete element can be represented in the sinogram representation, for instance, as a pixel. In this case all projection values in an energy bin are assigned to the respective discrete element that belong to a part of the projection data that corresponds to the part of the sinogram representation that is covered by the representation of the discrete element.

The discretization of the spectral projection data further comprises providing a discrete value for each energy bin for each discrete element representing the projection values in an energy bin that are assigned to the discrete element by the discretization. The discrete value can be determined, for instance, by providing a median value of all projection values in an energy bin allocated to the discrete element, by choosing one projection value of the projection values in an energy bin allocated to the discrete element for representing the projection values, by providing a weighted mean value of the projection values in an energy bin assigned to the discrete element, etc. Preferably, if the detector of the x-ray imaging system is a photon counting detector, the discrete value of an energy bin of a discrete element refers to a sum of all projection values, in this case comprising counts of photons, assigned to the discrete element. The discretized projection data then comprises the discrete values for each energy bin for each discrete element used for discretizing the spectral projection data.

The image reconstruction unit is then adapted to reconstruct the material-specific image of the object by applying a material decomposition algorithm on the discretized projection data. The discretized projection data comprises discrete values for each discrete element and for each energy bin of the predefined energy bins. Accordingly, from the energy information provided in the discretized projection data information on materials of the object can be acquired. The material decomposition algorithm can include a projection based decomposition algorithm, in which based on the discretized projection data first material projection data for each material are determined, wherein then based on the material projection data the material-specific image is reconstructed. Additionally or alternatively, the material decomposition algorithm can include an iterative material decomposition algorithm, in which based on the spectral projection data directly a material-specific image is generated. A suitable material decomposition algorithm can, for instance, be found in the article "Experimental feasibility of multi-energy photon-counting K-edge imaging in pre-clinical computed tomography", J.P Schlomka et al., Physics in Medicine & Biology, Volume 53, Number 15 (2008).

In an embodiment, the discretization unit is adapted to adapt the number of discrete elements used for discretizing the spectral projection data by adapting a size of the discrete elements, wherein the size of a discrete element refers to a number of projection values in an energy bin that are assigned to the discrete element. Preferably, the discretization unit is adapted to discretize the spectral projection data such that each projection value is assigned to at least one discrete element. Moreover, additional to the size of a discrete element also a shape of the discrete element can be adapted, wherein adapting the shape of a discrete element refers to adapting the projection values in an energy bin that are assigned to the discrete element. The discretization unit can be adapted to discretize the spectral projection data such that each projection value is assigned to only one discrete element. Alternatively, the discretization unit can also be adapted to discretize the spectral projection data such that a projection value can be assigned to more than one discrete element, for instance, to two discrete elements.

In a preferred embodiment, the discretization unit is adapted to discretize the spectral projection data such that discrete elements of one size overlap discrete elements of another size. In this preferred embodiment, a projection value can be assigned to discrete elements of different sizes but not to discrete elements of the same size. Accordingly, it becomes possible to discretize the complete spectral projection data using discrete elements of a first size and then to provide discrete elements of a second size to certain parts of the spectral projection data to adapt the number of discrete elements in this respective part of the spectral projection data. Also, more than two sizes of discrete elements can be provided, for instance, three or four sizes of discrete elements.

In an embodiment, the spectral projection data refers to spectral tomographic projection data and the discretization unit is adapted to determine a sinogram representation of the spectral tomographic projection data, wherein the discretization of the spectral projection data is based on the sinogram representation. Tomographic projection data refers to projection data comprising projection data for a plurality of views, i.e. projection angles, of the object. Preferably the tomographic projection data comprises a full projection data set, for instance, projection data from a plurality of views over an angular range of at least 180°. A sinogram representation of spectral tomographic projection data can be determined, for instance, by sorting the projection values with respect to an angle, i.e. a view, under which they were acquired. A sinogram representation of the spectral tomographic projection data can refer to providing a sinographic representation for each energy bin for which projection values were acquired and to discretize the spectral projection data based on characteristics found in at least one of the respective sinogram representations. Alternatively, the spectral projection data can be discretized based on characteristics found in all of the respective sinogram representations. Moreover, the determining of the sinogram representation can refer to determining only the sinogram representation of one predetermined energy bin and to discretize the spectral projection data of all energy bins with respect to the discretization of the spectral projection data of the energy bin for which the sinogram representation was determined.

In a preferred embodiment, the discretization unit is adapted to determine the sinogram representation of the spectral projection data based on projection values of each detector element that have been combined for all energy bins. Preferably, the projection values for different energy bins of a detector element are combined such that the result corresponds to a conventional projection value that would have been acquired without distinguishing between different radiation energies. For instance, if the detector is a photon counting detector a conventional projection value can be acquired by determining a sum over all projection values of a detector element in different bins, i.e. by summing the projection values over the bins. In such an embodiment, the determined sinogram representation of the tomographic projection data refers to a conventional sinogram representation that could have been acquired with an x-ray imaging system without energy differentiating capabilities, for instance, a conventional CT system.

In an embodiment, the discretization unit is adapted to determine a local spatial frequency of the sinogram representation and to determine the discretization of the spectral projection data based on the local spatial frequency as characteristic of the projection data. A spatial local frequency is generally known as a measure of a periodicity of structures of a physical entity, like an image, and can be determined, for instance, based on a Fourier transform of the image. In particular, the spatial local frequency of a sinogram representation of projection data is an indication for an amount of structural changes, i.e. an amount of changes in neighboring projection values, that can be found in a respective region of the sinogram representation. The local spatial frequency can be determined, for instance, be applying a discrete wavelet transform to the sinogram representation to determine the local spatial frequency. Preferably, the discretization unit can be adapted such that, if in a region of the sinogram the spatial frequency increases with respect to a neighboring region of the sinogram, the number of discrete elements with which a part of the projection data corresponding to the region of the sinogram is discretized, is increased. Further, the discretization unit can be adapted such that, if in a region of the sinogram the spatial frequency decreases with respect to a neighboring region of the sinogram, the number of discrete elements, with which a part of the projection data corresponding to the region of the sinogram is discretized, is decreased.

In an embodiment, the discretization unit is adapted to apply an edge detection algorithm to the sinogram representation to determine edge regions in the sinogram representation as characteristic of the spectral projection data, wherein the discretization unit is further adapted to determine the discretization such that in edge regions the number of discrete elements is increased with respect to non-edge regions. Edge regions can be defined, for instance, based on a gradient or a difference determined between two or more neighboring projection values in the sinogram representation exceeding a predetermined threshold. For instance, if the difference or the gradient between neighboring projection values in the sinogram representation exceeds the predetermined threshold, the region of the sinogram representation comprising these projection values can be defined as an edge region. A suitable edge detection algorithm can be found, for instance, in the article "A Computational Approach To Edge Detection" by J. Canny, IEEE Transactions on Pattern Analysis and Machine Intelligence, volume 8, pages 679 to 698 (1986). Alternatively, deep learning methods can be used for edge detection as described, for instance, in the article "Automated Edge Detection Using Convolutional Neural Network" by M. A. El-Sayed et al., International Journal of Advanced Computer Science and Applications, volume 4, pages 11 to 17 (2013).

Since such edge regions generally refer to changes in a composition of the object in this region, providing an increased number of discrete elements in the edge regions with respect to non-edge regions allows for a higher accuracy in the image reconstruction. In regions of the sinogram representation comprising no edges, i.e. smooth regions, the same material composition is to be expected in the whole region such that a higher accuracy of material composition will not provide an advantage.

In an embodiment, the discretization unit is adapted to determine projection values of the spectral projection data corresponding to a region of interest within the object. A region of interest within an object can be determined, for instance, based on pre-knowledge on the structure of the object. For instance, if it is known that for a material decomposition only an upper half of a head of a patient is of interest, then the discretization unit is adapted to determine the projection values of the spectral projection data referring to this upper half of the head of the patient. Alternatively, the region of interest can be provided in an already reconstructed image of the object, wherein the image can be reconstructed based on the spectral projection data itself or, for instance, on scout projection data acquired during a scout scan of the object. A user might then delineate a region of interest in the image or the region of interest might be automatically determined by known detection algorithms detecting, for instance, specific organs or tumor-like structures in an image. The projection values of the spectral projection data corresponding to the region of interest can be determined, preferably, by performing a ray-tracing from the radiation source to a respective detector element through the region of interest for each viewing angle under which projection data of the region of interest was acquired. The ray-tracing can take into account the geometry of the imaging system. Alternatively, the projection values of the spectral projection data corresponding to the region of interest can be determined by simulating the acquisition of the spectral projection data, in particular the traversing of the radiation through the region of interest of the object.

Preferably, the discretization unit is adapted to further adapt the number of discrete elements based on the region of interest. For instance, the discretization unit can be adapted to discretize the region of interest, i.e. the part of the spectral projection data comprising the projection values corresponding to the region of interest, with a generally increased number of discrete elements with respect to parts of the spectral projection data corresponding to regions outside the region of interest. In this embodiment the region of interest can also be regarded as corresponding to a characteristic of the spectral projection data such that the number of discrete elements can be adapted based in the region of interest. Alternatively, if it is known that materials for which a material-specific image should be reconstructed are substantially only found in the region of interest, the discretization unit is adapted to discretize only the projection values of the spectral projection data corresponding to the region of interest, wherein the image reconstructing unit is adapted to apply the material decomposition algorithm only to the discretized projection data corresponding to the region of interest. Accordingly, in this embodiment a material-specific image is only provided for the region of interest. Thus, the computational effort for providing a material-specific image of a region of interest can be decreased further.

In an embodiment, the image reconstructing unit is adapted to apply a material decomposition algorithm that performs the material decomposition for each discrete element individually. Preferably, a forward model of the x-ray imaging system is provided that describes expected projection values for each detector element and each energy bin as a function of a predetermined set of basis materials and their respective equivalent path lengths. During the material decomposition this forward model is inverted, for instance, by performing a maximum likelihood estimation. Preferably the forward model and the inversion of the forward model are adapted such that the material decomposition is performed for each discrete element individually. A detailed description of such an algorithm can also be found in the article "Experimental feasibility of multi-energy photon-counting K-edge imaging in pre-clinical computed tomography", J.P Schlomka et al., Physics in Medicine & Biology, Volume 53, Number 15 (2008).

In an embodiment, the image reconstruction unit is adapted to reconstruct the material-specific image based on a projection based decomposition algorithm, wherein during the reconstruction material projection data indicative for the attenuation of a specific material is determined based on the discrete projection data, wherein the image reconstruction unit is further adapted to interpolate the material projection data from the discretization of the discrete projection data to a uniform discretization and to reconstruct a material-specific image based in the interpolated material projection data. Since the projection based decomposition algorithm performs the material decomposition for each discrete element individually, the resulting material projection data comprises a material projection value for each discrete element of the spectral projection data. For reconstructing a material-specific image from the material projection data it is advantageous to interpolate the material projection values to uniform discrete elements, for instance, to discrete elements represented as uniform grid in a sinogram representation of the material projection values.

In another aspect of the invention, a method for reconstructing a material-specific image of an object is presented, wherein the method comprises the steps of a) providing spectral projection data of an object, wherein the spectral projection data has been acquired using an x-ray imaging system and comprises spectral projection values for each detector element of a radiation detector of the x-ray imaging system and for each energy bin of a plurality of pre-defined energy bins, wherein a projection value is indicative of radiation being detected by a detector element in one of the energy bins after having traversed the object, b) discretizing the spectral projection data, wherein the discretization of the spectral projection data comprises differentiating the spectral projection data into discrete elements and determining a discrete projection value for each energy bin for each discrete element, wherein to each discrete element at least one projection value of each energy bin is assigned and wherein the discrete projection value of an energy bin of a discrete element is determined based on the projection values in the energy bin assigned to the discrete element, wherein the number of discrete elements used for discretizing the spectral projection data is adapted locally based on local characteristics of the spectral projection data, c) reconstructing a material-specific image of the object by applying a material decomposition algorithm on the discretized projection data comprising the discrete projection values.

In another aspect of the invention, a computer program for reconstructing a material-specific image of an object is presented, wherein the computer program comprises program code means for causing the system of claim 1 to carry out the steps of the method as defined in claim 13 when the computer program is executed by a computer controlling the system.

It shall be understood that the system of claim 1, the method of claim 13 and the computer program of claim 14 have similar and/or identical preferred embodiments, in particular, as defined in the dependent claims.

It shall be understood that a preferred embodiment of the present invention can also be any combination of the dependent claims or above embodiments with the respective independent claims.

These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily an embodiment of a system for reconstructing a material-specific image of an object,
Fig. 2 shows schematically and exemplarily a discretization example with respect to a sinogram, and
Fig. 3 shows a flowchart exemplarily illustrating an embodiment of a method for reconstructing a material-specific image of an object.

### DETAILED DESCRIPTION OF EMBODIMENTS

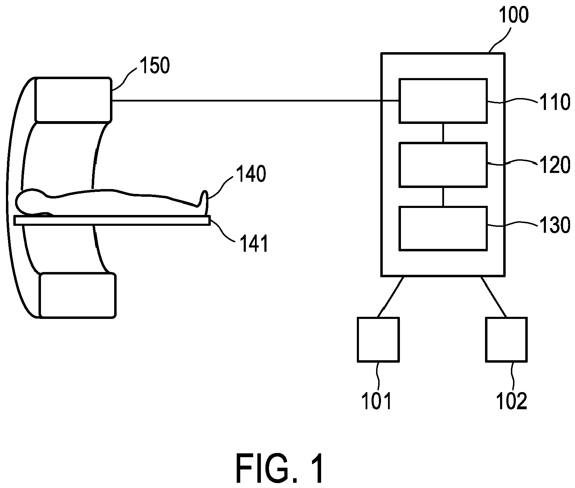

Fig. 1 shows schematically and exemplarily an embodiment of a system for reconstructing a material-specific image of an object. In the following embodiment the object is a patient 140 lying on a patient table 141. The system 100 comprises a projection data providing unit 110, a discretization unit 120 and an image reconstruction unit 130. Further, the system 100 comprises in this embodiment an output unit 101, for instance, a display, and an input unit 102, for instance, a keyboard or a mouse.

The projection data providing unit 110 is adapted to provide spectral projection data of the patient 140 acquired by an x-ray imaging system being in this embodiment a spectral CT system 150. In this embodiment, the projection data providing unit 110 is configured as a receiving unit for receiving the spectral projection data from the spectral CT system 150 and for providing the received spectral projection data. The spectral CT system 150 comprises a radiation source for generating x-ray radiation with different energies and a detector comprising a plurality of detector elements for detecting the radiation after having traversed a region of interest of a patient. The projection data provided by the spectral CT system 150 is spectral tomographic projection data comprising spectral projection data from different projection angles, i.e. different views, of the patient 140. Moreover, the spectral projection data comprises projection values for each detector element of the radiation detector and for each energy bin of a plurality of predefined energy bins for each acquired view.

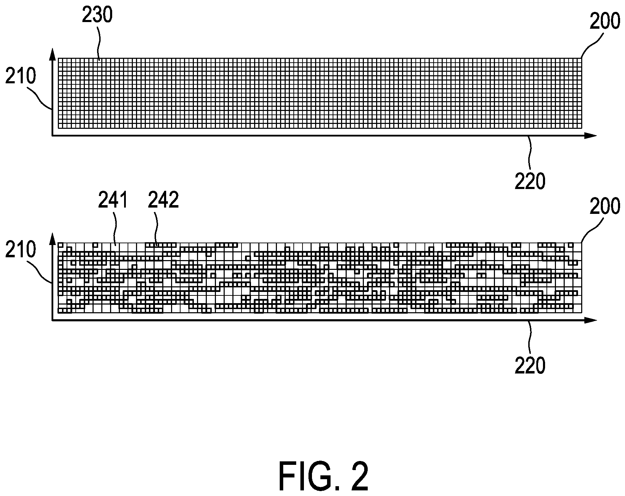

Discretization unit 120 is adapted to discretize the spectral projection data provided by the projection data providing unit 110. In this embodiment, the discretization unit 120 is further adapted to determine a sinogram representation of the provided spectral projection data. The sinogram representation refers to a sorting of the projection values with respect to the projection angle under with they were acquired. The spectral projection data is then discretized by the discretization unit 120 based on the determined sinogram representation. Discretization of the spectral projection data as performed by the discretization unit 120 is discussed in more detail with respect to Fig. 2.

Fig. 2 shows an exemplary sinogram representation 200 as determined from exemplary spectral projection data. The sinogram representation 200 is provided based on combining the projection values of all energy bins of a detector element such that conventional projection values are acquired. For instance, if the detector is a photon counting detector, the conventional projection values are determined by summing the projection values over the energy bins of a detector element. The discretization unit 120 then sorts the conventional projection values of the spectral projection data in accordance with the projection angle 220, i.e. view, and further in accordance with a distance 210 with respect to a center of the detector, for which they were acquired. For explanatory reasons, here only a sinogram represention 200 for one image slice of the patient 140 is presented. In standard discretization methods for projection data discretization, the sinogram is discretized into uniform discrete elements with the same size such that the discrete elements can be represented as a grid 230 of pixels having the same size. This is shown in the upper sinogram representation 200 provided in Fig. 2. An exemplary discretization according to the invention is shown in the lower sinogram represention 200 provided in Fig. 2. In this example the discretization unit 120 is adapted to a discretized sinogram representation 200 by providing first discrete elements 241 having a first size and by discretizing the sinogram representation 200 by distributing the first discrete elements 241 uniformly over the whole sinogram representation 200. As can be seen from Fig. 2, the first size of the first discrete elements 241 is much greater than the size of the standard discrete elements 230. Then to each first discrete element 241 all projection values in an energy bin are assigned that correspond to the area of the sinogram representation 200 covered by the respective first discrete element 241.

In this embodiment the discretization unit is further adapted to apply an edge detector algorithm, for instance a Canny edge detector algorithm, on the determined sinogram representation 200. The edge detector algorithm is configured to detect edge regions in the sinogram representation 200. The result of a Canny edge detector algorithm refers to a representation of the sinogram representation 200 showing only edge regions, i.e. regions in which features of the sinogram representation, in this exemplary case gray values of the sinogram, change sharply. Discretization unit 120 is then adapted to provide in the such determined edge regions second discrete elements 242 having a second size being smaller than the first size of the first discrete elements 241. By providing the second discrete elements 242 over the edge regions, and also over the first discrete elements 141, the number of discrete elements is increased in the edge regions. Then also to each second discrete element 242 all projection values in an energy bin are assigned that correspond to the area of the sinogram representation 200 covered by the respective second discrete element 241. Accordingly, in this embodiment a projection value can be assigned to two discrete elements of different size.

The above described sinogram representation 200 and also the respective representation of the discrete elements can further be provided to a user through the display 101. The user can then, for instance, check the discretization of the spectral projection data based on the provided sinogram representation and discrete element representation and can, if necessary, adapt the discretization manually using the input device 102. Moreover, a user might accept or reject the presented discretization of the spectral projection data, wherein, if the discretization of the spectral projection data is rejected, the system 100 determines a new discretization, for instance, based on another characteristics of the projection data, based on different discrete element sizes, specifications of the user, etc.

Further, the discretization unit 120 is adapted to determine for each discrete element 241, 242 and each energy bin, a discrete projection value representing the projection values in an energy bin assigned to the respective discrete element 241, 242. Since in this embodiment a photon counting detector is contemplated, the discrete projection value of an energy bin and of a discrete element 241, 242 refers to a sum of the projection values in the energy bin assigned to the respective discrete element 241, 242. The discrete projection values in each energy bin then form the discretized projection data.

The image reconstruction unit 130 then reconstructs the material-specific image of the patient 140 by applying a material decomposition algorithm on the discretized projection data. In this embodiment, the material decomposition algorithm is chosen as a projection based material decomposition algorithm that determined material projection data for a plurality of predetermined basis materials, like water and iodine. The projection based material decomposition algorithm preferably determines for each discrete element a material projection value based on the corresponding discrete projection values of each energy bin. I.e. the projection based material decomposition algorithm performs the material decomposition pixel-wise. Further, in this embodiment the image reconstruction unit 130 is adapted to interpolate the material projection data from the discretization of the discrete projection data to a uniform discretization, i.e. a discretization that can be represented as a uniform grid in a sinogram representation of the material projection data. Based on the interpolated material projection data material-specific images of each basis material can be reconstructed.

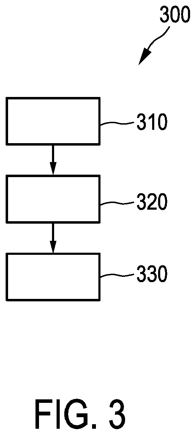

In the following, an embodiment of a method 300 for reconstructing a material-specific image of an object will be described with reference to a flowchart shown in Fig. 3. In step 310, spectral projection data of the patient 140 is provided, for instance, by the projection data providing unit 110. In a preferred embodiment, the spectral projection data refers to spectral tomographic projection data and comprises a projection value for each detector element of a radiation detector of the spectral CT system 150 and for each energy bin of a plurality of predefined energy bins for each projection angle, i.e. view, for which spectral projection data was acquired. In a second step 320, the spectral projection data is discretized, wherein the discretization of the spectral projection data comprises differentiating the spectral projection data into discrete elements 241, 242. In a preferred embodiment, for discretizing the spectral projection data further a sinogram representation 200 is determined for the spectral projection data and the spectral projection data is discretized based on the sinogram representation 200. Moreover, during the discretization characteristics of the projection data are determined, for instance, in the sinogram representation 200 and the number of discrete elements 241, 242 used for discretizing the spectral projection data is adapted locally based on the characteristics of the projection data. Further, for each discrete element 241, 242 and each energy bin a discrete projection value is determined based on projection values assigned to the discrete element. In the last step 330, the material-specific image of the patient 140 is reconstructed by applying a material decomposition algorithm on the discretized projection data comprising the discretized projection values.

Multi-energy photon counting detectors classify x-ray photons transmitted through a given inspected object into a set of discrete energy windows, i.e. energy bins. This energy information allows discerning and quantifying materials of the respective object. This can be achieved by, for instance, a pixel-wise, i.e. discrete element-wise, inversion of a system forward model which describes the photon counts in individual bins as a function of certain sets of basis materials and the respective equivalent path lengths. Such a procedure is one example of a basis material decomposition algorithm.

When using a photon counting detector it is desirable to construct the detector elements, i.e. detector pixels, as small as possible to avoid pulse pile-up. But, small detector elements limit the amount of detected photons per integration time period and detector element. In case of low numbers of detected photons, a severe bias can be introduced in the outcome of the material decomposition. On the other hand, in many objects features in a region of interest vary only slowly in comparison with the distribution of the discrete elements, i.e. the pixel grid. In such cases, many pixels, i.e. discrete elements, see the same material combinations. Exemplary for such slowly varying features are features observed in liver imaging.

Moreover, due to the non-linearity and ill conditioning of a material decomposition problem, the solution search is often associated with a substantial amount of computational resources. This is an undesirable property in clinical applications when patient throughput is of most importance. In some special medical applications with a demanding time crucial workflow, for instance, during a stroke, a heart attack or trauma image generation, the image reconstruction must be fast in order not to slow down the whole workflow. Spectral imaging, i.e. the providing of material-specific images, can only play a role in such applications when the reconstruction is fast enough to fit into the workflow. In addition, as already discussed above, low photon statistics, i.e. low photon counts, can contribute to a bias in the material quantification, which can, potentially, lead to misdiagnosis. Simply using a coarser grid than the standard grid, i.e. using less discrete elements than in a standard discretization, will not solve the above-mentioned problem, since such a coarse grid will introduce a bias due to the spectral partial volume effect at borders of object features, for instance, at a border between bone and soft tissue. The present invention proposes, for instance, to use an adaptive multi-resolution material decomposition protocol. By analyzing characteristics, for instance, spatial features, of the spectral projection data, different discretization levels, i.e. numbers of discrete elements, can be employed locally in order to reduce the number of points, i.e. elements, that will be undergoing material decomposition. A respective procedure leads to a reduction in computational time and also to a local bias reduction. The respective spectral projection data can comprise the detected photon counts for each detector element and each energy bin and possibly for each view.

A material decomposition can typically be performed in a discrete element-wise, for instance, pixel-wise manner. The discretization of the spectral projection data can, for instance, be based on a sinogram representation of the spectral projection data. The aim is then to reduce the number of discrete elements, for instance, pixels, for which a material decomposition is determined by locally adapting the number of discrete elements, for instance, by adapting a grid representation of the discrete elements. For smooth sinogram regions a photon count level, i.e. a number of detected photons, per element can be increased, for instance, by providing a low number of discrete elements with each discrete elements assigned with more than one projection value, for instance, by grouping the projection values based on their position in the sinogram representation. This leads to a bias reduction in the respective regions.

In one embodiment, the characteristic of the spectral projection data on which the adaptation of the number of discrete elements can be based, is a structural feature of the sinogram representation. In this case, the sinogram representation can be processed with an edge detector, for instance, a Canny edge detector, in order to determine the positions of edge regions referring to boundaries between different gray values of the sinogram representation. These edge regions actually require employing of a large number of discrete elements, for instance, by providing a fine pixel decomposition grid. For smooth regions, i.e. regions between the boundary regions, a larger number of discrete elements, for instance, by providing a coarser grid, can be employed. In one embodiment, the larger discrete elements can be acquired by merging smaller discrete elements to effectively reduce the number of discrete elements that have to be considered during material decomposition, such that a computational time can be reduced.

Also other forms of characteristics of the spectral projection data can be employed. The characteristics can refer, for instance, to strong boundaries, weak boundaries, curved regions, flat regions, etc. detected in a representation of the spectral projection data. Moreover, more than two types of discrete image elements can be used to adapt a number of discrete elements in a specific region of the projection data. The number of discrete elements, i.e. the discretization level, can be chosen automatically, for instance, based on a form of local frequency analysis, i.e. wavelet transform, or provided as an input by a user.

Typically, a user is interested in a specific region of interest of the object and wants to know, for instance, the distribution of a contrast agent only in this region or wants to determine the tissue composition for only one organ. In such cases, the system can be adapted to allow the user to select manually a region of interest, for instance, an organ, in a conventional image of the object. Then, all projection values contributing to this region of interest can be determined in the spectral projection data being, for instance, a photon counting projection data set, and a discretization and material decomposition can be triggered only for these projection values, if it is known that the basis materials are substantially only found in the region of interest. Alternatively, a discretization and material decomposition can be determined using a large number of discrete elements, i.e. a fine grid or by adapting the number of discrete elements as described above, in the region of interest, wherein the rest of the projection data is discretized and decomposed with a larger number of discrete elements, i.e. on a coarse grid.

Although in the above embodiments the sinogram representation was provided as a 2D sinogram representation based on conventional projection data, in other embodiments the sinogram representation on which the discretization is based can also be a sinogram representation of projection values of only one energy bin or of a different combination of projection values of all energy bins than the combination for providing a conventional sinogram representation. Moreover, also more than one sinogram representation can be provided, for instance, for each image slice of the object one sinogram representation can be provided for the spectral projection data, wherein a discretization of spectral projection data corresponding to each sinogram representation can differ. Moreover, instead of a 2D sinogram representation corresponding to each image slice of the object, a 3D sinogram representation can be provided based on the sinogram representations for each image slice of the object. In this case, instead of 2D discrete elements also 3D discrete elements, for instance, in the form of voxels, can be provided.

Although in the above embodiments the discrete elements shown had the form of 2D pixels, in other embodiments the discrete elements can be represented in different shapes, for instance, in triangular shapes, pentagonal shapes, or completely arbitrary shapes. Moreover, although in the above embodiments the discrete elements refer to 2D discrete elements, in other embodiments the discrete elements can also refer to 3D or even more dimensional discrete elements.

Although in the above embodiments the discretization was based on a sinogram representation of the projection data, in other embodiments the discretization can be based on other representations of the spectral projection data, for instance, a spatial representation of the spectral projection data. Moreover, the discretization of the spectral projection data can be determined without determining a representation of the spectral projection data, i.e. based directly on the spectral projection data itself.

Although in the above embodiments an edge detector algorithm, in particular a Canny edge detector algorithm, was used to detect edge regions as characteristics of the projection data in the sinogram representation, in other embodiments other characteristics of the spectral projection data can be used as basis for adapting the number of discrete elements used for discretizing the spectral projection data. For instance, in another embodiment a local frequency analysis, like a wavelet transform, can be performed based on the sinogram representation and the number of discrete elements can be increased locally with an increasing local frequency. Moreover, also projection data characteristics like strong boundaries, weak boundaries, curved regions or flat regions etc. detected in the spectral projection data itself or in a representation of the spectral projection data can be used as indicator for adapting the number of discrete elements.

Although in the above embodiment the whole spectral projection data was discretized, in other embodiments a region of interest can be provided, for instance, based on an already reconstructed image of the object, and the spectral projection data can be discretized based on the provided region of interest. In this case the discretization unit can be adapted to determine projection values corresponding to the region of interest and to discretize only the part of the spectral projection data comprising the projection values corresponding to the region of interest. Alternatively, all of the spectral projection data can be discretized, wherein only for the part of the spectral projection data corresponding to the region of interest the number of discrete elements is adapted as described above. Or further alternatively, the number of discrete elements used for discretizing the part of the spectral projection data referring to the region of interest can be generally increased with respect to the part of the spectral projection data not referring to the region of interest.

Although in the above embodiments the material decomposition algorithm was a projection based material decomposition algorithm, in other embodiments the material decomposition algorithm can be an iterative material decomposition algorithm. In this case the interpolation of the material projection data can be omitted, or incorporated into each iterative step of the iterative material decomposition algorithm.

Although in the above embodiments the x-ray imaging device was a spectral CT system, in other embodiments the x-ray imaging system can also be a dual energy CT system, C-arm CT system, an angiography system, etc.

Although in the above embodiments the object was a patient, in other embodiments the object can be an animal or even an inanimate object, for instance, a suitcase. Thus, although in the above embodiments the invention was described in the context of a medical application, the invention can also be applied in other contexts, for instance, in a context of a border control.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The fact that certain measures are recited in mutual different dependent claims does not indicate that the combination of these measures cannot be used to advantage.

Procedures like a discretization of the projection data or the reconstructing of the material-specific image performed by one or several units or devices can be performed by any other number of units or devices. For instance, these procedures can be carried out by a single device. These procedures and/or the control of the system for reconstructing a material-specific image can be implemented as program code means of a computer program and/or as dedicated hardware.

A computer program may be stored/distributed on a suitable medium, such as an optical storage medium or a solid-state medium, supplied together with or as a part of other hardware, but may also be distributed in other forms, such as via the Internet or other wired or wireless telecommunication systems.

Any reference signs in the claims should not be construed as limiting the scope.

The invention refers to a system for reconstructing a material-specific image. The system comprises a projection data providing unit providing spectral projection data that has been acquired using an x-ray imaging system, for instance, a spectral CT system. A discretization unit adapted to differentiate the spectral projection data into discrete elements and to determine a discrete projection value for each energy bin for each discrete element, wherein the discrete projection value is determined based on the projection values in the energy bin assigned to the discrete element, wherein the number of discrete elements is adapted locally based on local characteristics of the spectral projection data. An image reconstructing unit reconstructs the material-specific image by applying a material decomposition algorithm on the discretized projection data. The system allows for improving the image quality of a material-specific image while reducing the computational costs during the reconstruction of the material-specific image.

## Claims

1. A system for reconstructing a material-specific image of an object, wherein the system comprises:
a projection data providing unit (110) for providing spectral projection data of an object, wherein the spectral projection data has been acquired using an X-ray imaging system (150) and comprises projection values for each detector element of a radiation detector of the X-ray imaging system (150) and for each energy bin of a plurality of pre-defined energy bins, wherein a projection value is indicative of radiation being detected by a detector element in one of the energy bins after having traversed the object,
a discretization unit (120) for discretizing the spectral projection data, wherein the discretization of the spectral projection data comprises differentiating the spectral projection data into discrete elements (241, 242) and determining a discrete projection value for each energy bin for each discrete element, wherein to each discrete element (241, 242) at least one projection value of each energy bin is assigned and wherein the discrete projection value of an energy bin of a discrete element is determined based on the projection values in the energy bin assigned to the discrete element, wherein the number of discrete elements (241, 242) used for discretizing the spectral projection data is adapted locally based on local characteristics of the spectral projection data,
an image reconstructing unit (130) for reconstructing a material-specific image of the object by applying a material decomposition algorithm on the discretized projection data comprising the discrete projection values.

2. The system according to claim 1, wherein the discretization unit (120) is adapted to adapt the number of discrete elements (241, 242) used for discretizing the spectral projection data by adapting a size of the discrete elements (241, 242), wherein the size of a discrete element (241, 242) refers to a number of projection values in an energy bin that are assigned to the discrete element (241, 242).

3. The system according to claim 2, wherein the discretization unit (120) is adapted to discretize the spectral projection data such that discrete elements (241, 242) of one size overlap discrete elements (241, 242) of another size.

4. The system according to any of the previous claims, wherein the spectral projection data refers to spectral tomographic projection data and wherein the discretization unit (120) is adapted to determine a sinogram representation (200) of the spectral projection data, wherein the discretization of the spectral projection data is based on the sinogram representation (200).

5. The system according to claim 4, wherein the discretization unit (120) is adapted to determine the sinogram representation of the spectral projection data based on projection values of each detector element that have been combined for all energy bins.

6. The system according to any of claims 4 and 5, wherein the discretization unit (120) is adapted to determine a local spatial frequency of the sinogram representation (200) and to determine the discretization of the spectral projection data based on the local spatial frequency as characteristic of the spectral projection data.

7. The system according to any of the claims 4 to 6, wherein the discretization unit (120) is adapted to apply an edge detection algorithm to the sinogram representation (200) to determine edge regions in the sinogram representation (200) as characteristic of the spectral projection data, wherein the discretization unit (120) is further adapted to determine the discretization such that in edge regions the number of discrete elements (241, 242) is increased with respect to non-edge regions.

8. The system according to any of the previous claims, wherein the discretization unit (120) is adapted to determine projection values of the spectral projection data corresponding to a region of interest within the object.

9. The system according to claim 8, wherein the discretization unit (120) is adapted to further adapt the number of discrete elements (241, 242) based on the region of interest.

10. The system according to claim 8, wherein the discretization unit (120) is adapted to discretize only the projection values of the spectral projection data corresponding to the region of interest, wherein the image reconstructing unit (130) is adapted to apply the material decomposition algorithm only to the discretized projection data corresponding to the region of interest.

11. The system according to any of the previous claims, wherein the image reconstructing unit (130) is adapted to apply a material decomposition algorithm that performs the material decomposition for each discrete element (241, 242) individually.

12. The system according to any of claim 11, the image reconstruction unit (130) is adapted to reconstruct the material-specific image based on a projection based decomposition algorithm, wherein during the reconstruction material projection data indicative for the attenuation of a specific material is determined based on the discrete projection data, wherein the image reconstruction unit (130) is further adapted to interpolate the material projection data from the discretization of the discrete projection data to a uniform discretization and to reconstruct a material-specific image based in the interpolated material projection data.

13. A method for reconstructing a material-specific image of an object, wherein the method comprises the steps of:
providing (310) spectral projection data of an object, wherein the spectral projection data has been acquired using an X-ray imaging system (150) and comprises projection values for each detector element of a radiation detector of the X-ray imaging system (150) and for each energy bin of a plurality of pre-defined energy bins, wherein a projection value is indicative of radiation being detected by a detector element in one of the energy bins after having traversed the object,
discretizing (320) the spectral projection data, wherein the discretization of the spectral projection data comprises differentiating the spectral projection data into discrete elements (241, 242) and determining a discrete projection value for each energy bin for each discrete element, wherein to each discrete element (241, 242) at least one projection value of each energy bin is assigned and wherein the discrete projection value of an energy bin of a discrete element is determined based on the projection values in the energy bin assigned to the discrete element, wherein the number of discrete elements (241, 242) used for discretizing the spectral projection data is adapted locally based on local characteristics of the spectral projection data,
reconstructing (330) a material-specific image of the object by applying a material decomposition algorithm on the discretized projection data comprising the discrete projection values.

14. A computer program for reconstructing a material-specific image of an object, wherein the computer program comprises program code means for causing the system of claim 1 to carry out the steps of the method as defined in claim 13 when the computer program is executed by a computer controlling the system.
